# EUROPEAN PATENT SPECIFICATION

(11) **EP 2 552 763 B1**
(45) Date of publication and mention of the grant of the patent: **25.12.2019**
(21) Application number: 11762120.1
(22) Date of filing: 28.03.2011
(51) Int. Cl.: B62D 21/00, B62D 25/08, B62D 25/00

(54) **COMMON UNDERBODY PLATFORM FOR FRONT ENGINE FRONT WHEEL DRIVE AND REAR ENGINE REAR WHEEL DRIVE VEHICLES**
ALLGEMEINE UNTERBODENPLATTFORM FÜR FAHRZEUGE MIT VORDERMOTOR-VORDERRAD-ANTRIEB UND HINTERMOTOR-HINTERRAD-ANTRIEB
SOUBASSEMENT DE CARROSSERIE COMMUN POUR VÉHICULES À TRACTION AVANT DOTÉS D'UN MOTEUR À L'AVANT OU À TRACTION ARRIÈRE DOTÉS D'UN MOTEUR À L'ARRIÈRE

(30) Priority: 29.03.2010 IN 929MU2010
(43) Date of publication of application: 06.02.2013
(73) Proprietor: Tata Motors Limited, 400 001 Mumbai, Maharashtra (IN)
(72) Inventor: RAJHANS Ravindra G., Mumbai 400 001, Maharashtra (IN); PATIL, Rajendra, G., Mumbai 400 001, Maharashtra (IN); JAPTIWALE, Amit, S., Mumbai 400 001, Maharashtra (IN); LOKHANDE, Chetan, N., Mumbai 400 001, Maharashtra (IN); DAPHAL, Pratap, N., Mumbai 400 001, Maharashtra (IN)
(74) Representative: Branca, Emanuela
(86) International application number: PCT/IN2011/000208
(87) International publication number: WO 2011/121606

(56) References cited:
- WO-A1-2009/072614
- WO-A1-2009/072614
- WO-A2-03/057529
- WO-A2-03/057529

## Description

### FIELD OF INVENTION:

The invention generally relates to motor vehicle body, and particularly to a common underbody for monocoque construction to facilitate front engine front wheel drive as well as rear engine rear wheel drive vehicles. More particularly it relates to modular underbody component design and packaging to handle version complexity, and to minimize the investment cost, as well as shorter lead times from vehicle concept to start of production.

### BACKGROUND OF THE INVENTION:

An underbody is a critical factor for the structural integrity of a unibody vehicle. Basically there are four unibody structures namely front-engine rear-drive, front-engine front-wheel drive, mid-engine rear-drive and rear-engine rear-wheel drive. In front-engine front-wheel drive, the engine is mounted between the front rails and the transaxle drives the front wheels. It is also called a front-wheel drive vehicle. Whereas the rear-engine rear-wheel drive is one which places both the engine and drive wheels at the rear of the vehicle. Such an underbody is known from WO2009072614.

The conventional motor vehicles having monocoque construction and front-engine front-wheel drive architecture includes a dedicated front structure for engine, front suspension, steering and cooling pack mounting. The rear structure includes a rear suspension and fuel system mounting. But due to engine in front it is difficult to get a good aerodynamic mono volume vehicle. Whereas the vehicles having monocoque construction and rear-engine rear-wheel drive architecture includes a dedicated front structure for front suspension, steering and cooling pack mounting. The rear structure includes an engine, rear suspension and fuel system mounting. Having engine in the rear side gives simplicity for monovolume vehicle but further models like coupe, sedan, compact sedan, MPV etc are not feasible. Hence the vehicle manufacturers are required to develop a minimum of two different sets of underbody platforms to cater these two different engine location approaches. Hence there is an increase in cost, investment, man-hour, testing requirements and time for development of different sets of underbody for different segments of vehicles.

### OBJECT OF THE INVENTION

The primary object of the present invention is to obviate the above mentioned drawbacks.

Another object of the invention is to provide a modular under body structure for motor vehicles with flexible location of engine for front-engine front-wheel drive as well as rear-engine rear-wheel drive vehicles.

Yet another object of the present invention is to manufacture vehicle variants by using major common aggregates.

### SUMMARY OF THE INVENTION

The various embodiments of the present invention provide a common underbody for vehicles. The common underbody comprises a lower sub-structure having a front extended frame, firewall, front floor and a modular rear floor to accommodate common aggregates to define the underbody of the vehicle. The common aggregates are selectively mounted on said lower sub-structure to manufacture vehicle variants with desired location of engine at front end or rear end of the vehicles. A cradle is provided at rear end of said lower sub-structure. A frame extension elements and a mid floor is provided at rear end for manufacturing front engine variant. A modular front suspension mounting point is provided for manufacturing vehicle variants.

According to present invention, said front extended frame is provided for mounting front engine in case of front engine front wheel drive vehicle. In case of front engine mounting a CNG/LPG cylinder or battery can be mounted on said cradle below said modular rear floor. The frame extension elements and mid floor is mounted on the substructure when the front engine such as sedan is to be constructed and said rear floor assembly is fitted after mid floor element to achieve the commonality. In case of rear engine mounting the rear floor portion is removed and extended floor portion is provided to mount the rear engine and the front engine mounting space can be utilized for mounting the spare wheel etc. The cradle is provided for mounting rear engine or CNG/LPG cylinder or battery pack etc and further a modified frame can be attached at rear end for increase in the capacity of alternate fuels.

The common aggregates assembled on said sub-structure to manufacture front engine front wheel drive variant are wheel arch outer, suspension tower outer, wheel arch inner, rear floor assembly, front engine, a cradle for mounting CNG/LPG cylinder or battery at rear end, a fuel tank mounted below the lower sub-structure etc. The common aggregates assembled on said lower sub-structure to manufacture rear engine rear wheel drive variant are suspension tower inner, wheel arch inner, rear floor assembly, a cradle for mounting engine at rear end and a fuel tank mounted below lower sub-structure. For front engine front wheel drive vehicle or sedan variant said front suspension mounting point is at the front where as for rear engine mounting the front wheel mounting point can be shifted inside to reduce the distance between the front and the rear wheel base region. A change in a wheel base to obtain said vehicle variant is achieved by altering the location of front suspension mounting point while keeping the rear suspension mounting point same. The front suspension tower location can be mounted inside or outside of the passenger compartment without modifying or changing the firewall.

The common underbody offers greater flexibility in transferring production from one plant to another due to standardization. More over it reduces the development and testing time. It offers greater generate space for electric, CNG, LPG, variants without hampering the customer usable space. The cost reduction is achieved by utilizing the resources on a global scale. Moving forward, the common under body of the present invention can be used in compact car segments such as hatchbacks, sedans, compact sedans, and coupe, MPV etc to reduce the cost of production and to offer large interior space.

### BRIEF DESCRIPTION OF THE DRAWINGS

FIG. 1 shows an exploded view of the common underbody for front-engine front-wheel drive and rear-engine rear-wheel drive vehicles, according to one embodiment of the present invention.
FIG. 2 shows an exploded view of the common underbody to design a front-engine front-wheel drive vehicle, according to one embodiment of the present invention.
FIG. 3 shows an assembled view of the underbody for front-engine front-wheel drive vehicle, according to one embodiment of the present invention.
FIG. 4 shows a side view of the underbody for front- front-engine front-wheel drive vehicle, according to one embodiment of the present invention.
FIG. 5 shows an exploded view of the common underbody to design a rear-engine rear-wheel drive vehicle, according to one embodiment of the present invention.
Fig. 6 shows an assembly of different sets of elements which form an underbody for Rear engine rear wheel drive vehicle.
FIG. 7 shows a side view of the underbody for rear-engine rear-wheel drive vehicle.

### DETAILED DESCRIPTION

The various embodiments of the present invention provide a common underbody for vehicles. The common underbody comprises a lower sub-structure 1 having a front extended frame 12, firewall 13, front floor and a modular rear floor 5 to accommodate common aggregates to define the underbody of the vehicle. The common aggregates are selectively mounted on said lower sub-structure to manufacture vehicle variants with desired location of engine at front end or rear end of the vehicles. A cradle is provided at rear end of said lower sub-structure. A frame extension elements and a mid floor is provided at rear end for manufacturing front engine variant. A modular front suspension mounting point is provided for manufacturing vehicle variants.

Referring now to the drawings wherein the showings are for the purpose of illustrating a preferred embodiment of the invention only, and not for the purpose of limiting the same.

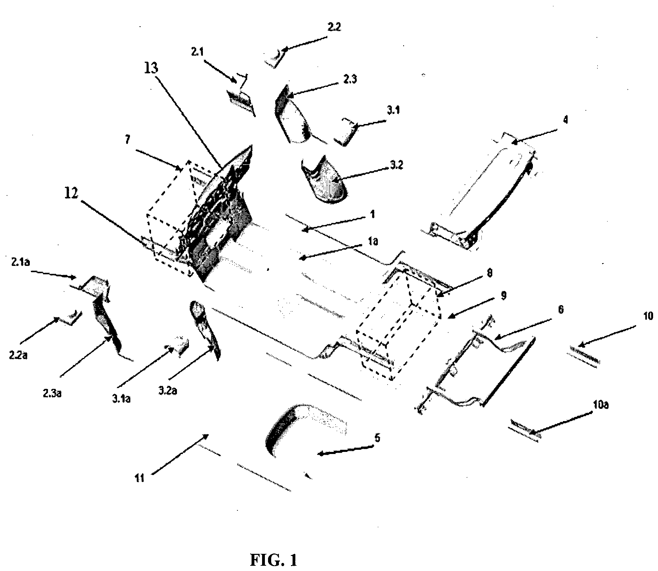

The present invention provides a common underbody for front engine-front wheel drive as well as rear-engine rear wheel drive vehicles. FIG. 1 is an exploded view of the common underbody with all the components required to manufacture front-engine front-wheel drive as well as rear-engine rear-wheel drive vehicles, according to one embodiment of the present invention. As shown in FIG. 1, the lower sub-structure 1 is a self supporting underbody. The lower sub-structure 1 accommodates various components or common aggregates to define the underbody of the vehicle with different drive locations. The lower sub-structure 1 includes a front extended frame 12, firewall 13, front floor and a part of rear floor 5. The fuel tank la is mounted below the lower sub-structure 1. The common aggregates can be assembled on the lower sub-structure 1 through bolting, spot welding, arc welding, riveting, adhesive bonding etc. The lower sub-structure 1 is taken as the reference segment of the vehicle to be made. The common aggregates to be assembled to the lower sub-structure 1 are, a wheel arch outer 2.1 and 2.1a is mounted on both the left and right hand side of the lower sub-structure 1, a suspension tower outer 2.2 and 2.2a is assembled on both the left and right side of the lower sub-structure 1 from outside of the firewall, a suspension tower inner 3.1 and 3.1a is assembled on both the left and right hand side of the lower sub-structure, a wheel arch inner 2.3, 2.3a, 3.1 and 3.1a is mounted on both the left and right hand side of the lower sub-structure, a rear floor assembly is bolted or welded to the lower sub-structure 1 to complete the underbody. The engine is mounted at the front or rear portion of the lower sub-structure 1 based on the vehicle model to be designed. The cradle 6 is provided for mounting the engine. A space is provided at the rear end of the rear-engine rear-wheel vehicle to mount the CNG cylinder, LPG cylinder and Battery Pack for electric vehicle. A cradle 6 is provided at the rear end to mount the CNG cylinder, LPG cylinder and battery pack as per requirement. Consider for example, when the front engine such as sedan is to be constructed the frame extension 10 and 10a and mid floor 11 can be used. The rear floor assembly is fitted after mid floor 11 to achieve the commonality. Accordingly, all the mechanical elements or common aggregates mentioned above are mounted on the lower sub-structure 1 to design the front-engine front-wheel drive or the rear-engine rear-wheel drive vehicles. The front-engine front-wheel drive vehicle variant can be a only petrol/diesel engine mounted at front frame or a petrol/diesel engine at front and CNG/LPG/battery at rear end or electrical vehicle with a motor at front end etc. The rear-engine rear-wheel drive vehicle variant may include a petrol/diesel at rear end with a spare wheel at front.

The change in wheel base can be achieved by altering the location of front suspension mounting point, while keeping the rear suspension mounting point same. For this front suspension tower location can be kept inside or outside of the passenger compartment without modifying or changing the firewall. The engine in case of rear mounting position is mounted on a boltable cradle 6 the same cradle 6 can be used with modularity for mounting CNG/LPG cylinder or Battery pack or rear engine. For further increase in capacity of alternate fuels, a new frame can be developed & attached to body in later stage.

According to present invention, said front extended frame 12 is provided for mounting front engine 7 in case of front engine front wheel drive vehicle. In case of front engine mounting a CNG/LPG cylinder or battery 9 can be mounted on said cradle below said modular rear floor 5. The frame extension elements (10 and 10a) and mid floor 11 is mounted on the substructure 1 when the front engine such as sedan is to be constructed and said rear floor 5 is fitted after mid floor element 11 to achieve the commonality. In case of rear engine mounting the rear floor 5 is removed and extended floor portion 4 is provided to mount the rear engine and the front engine mounting space can be utilized for mounting the spare wheel etc. The sub frame structure according to present invention is provided for manufacturing vehicle variants such as hatch back, coupe, sedan, multi purpose vehicle etc. The cradle is provided for mounting rear engine or CNG/LPG cylinder or battery pack etc and further a modified frame can be attached at rear end for increase in the capacity of alternate fuels.

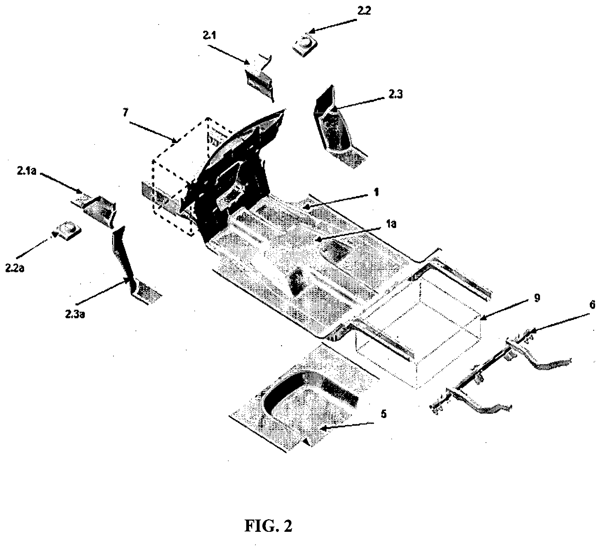

The common aggregates assembled on said sub-structure to manufacture front engine front wheel drive variant as shown in FIG. 2 are wheel arch outer (2.1 & 2.1a), suspension tower outer (2.2 & 2.2a), wheel arch inner (2.3 & 2.3a), rear floor assembly 5, front engine 7, a cradle 6 for mounting CNG/LPG cylinder or battery 9 at rear end, a fuel tank la mounted below the lower sub-structure etc. The common aggregates assembled on said lower sub-structure to manufacture rear engine rear wheel drive variant are suspension tower inner (3.1 & 3.1a), wheel arch inner (3.2 & 3.2a), extended rear floor 4, a cradle 6 for mounting engine at rear end and a fuel tank mounted below lower sub-structure 1. The common aggregates are assembled on the lower sub-structure 1 through bolting, spot welding, arc welding, riveting, adhesive bonding etc. For front engine front wheel drive vehicle or sedan variant said front suspension mounting point is at the front where as for rear engine mounting the front wheel mounting point can be shifted inside to reduce the distance between the front and the rear wheel base region. A change in a wheel base to obtain said vehicle variant is achieved by altering the location of front suspension mounting point while keeping the rear suspension mounting point same. The front suspension tower location can be mounted inside or outside of the passenger compartment without modifying or changing the firewall.

When the engine is placed in rear position, the boltable sub frame will carry steering rack assembly, front suspension components (e.g. lower link, ARB etc). A rear engine rear wheel drive will facilitate a compact car with maximum interior space and a small footprint. The engine incase of front mounting position will be mounted on 2 front crash members with the help of engine mounts. The front engine front wheel drive will eliminate the drawbacks of rear engine vehicle and will gratify the needs of other vehicle segments maintaining high manufacturing and quality standards with reduced costs.

FIG. 2 is an exploded view of the common underbody to design a front-engine front-wheel drive vehicle, according to one embodiment of the present invention. The components shown in FIG. 2 are assembled on the lower sub-structure. The common aggregates can be assembled on the lower sub-structure 1 through bolting, spot welding, arc welding, riveting, adhesive bonding, etc. The lower sub-structure 1 is taken as the reference segment of the vehicle to be made. The wheel arch outer 2.1 and 2.1a is mounted on both the left and right hand side of the lower sub-structure. The suspension tower outer 2.2 and 2.2a is assembled on both the left and right side of the lower sub-structure 1 from outside of the firewall. The wheel arch inner 2.3 and 2.3a is mounted on both the left and right hand side of the lower sub-structure. The rear floor assembly 5 is bolted or welded to the lower sub-structure 1 to complete the underbody. The front engine 7 is mounted on the front portion of the lower sub-structure. A space is provided at the rear end to mount the CNG cylinder, LPG cylinder and Battery Pack for electric vehicle. A cradle 6 is provided at the rear end to mount the CNG cylinder, LPG cylinder and battery pack as per requirement. A fuel tank la is mounted below the lower sub-element. Consider for example, when the front engine such as sedan is to be constructed the frame extension (10 and 10a) and mid floor 11 can be used. The rear floor assembly 5 is fitted after mid floor 11 element to achieve the commonality.

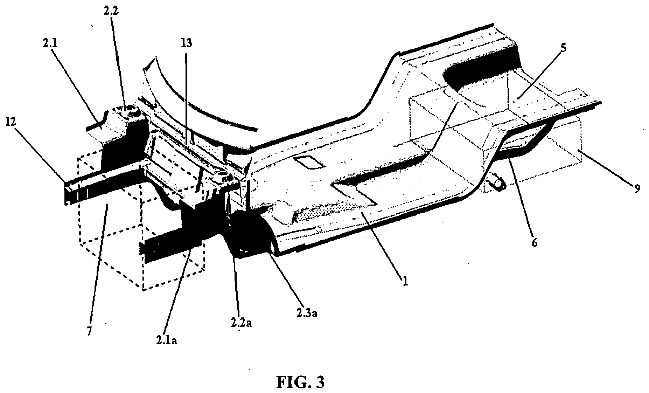

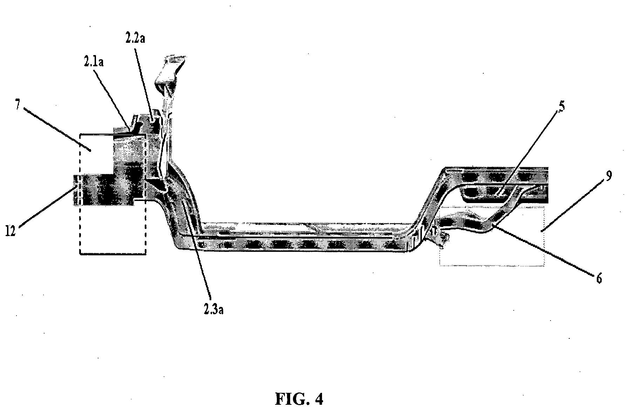

FIG. 3 is an assembled view of the underbody for front-engine front-wheel drive vehicle, according to one embodiment of the present invention. The configuration includes the components 1, 2.1, 2.2, 2.3, 2.1a, 2.2a, 2.3a, 5, 6, 7 and 9 to obtain a front-engine front-wheel drive vehicle. FIG. 4 is a side view of the underbody for front-engine front-wheel drive vehicle, according to one embodiment of the present invention.

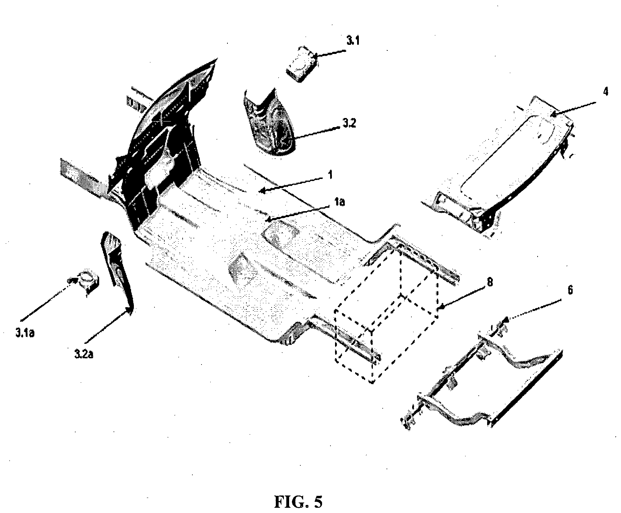

FIG. 5 is an exploded view of the common underbody to design a rear-engine rear-wheel drive vehicle, according to one embodiment of the present invention. To manufacture a rear-engine rear-wheel drive vehicle the common aggregates are assembled on the lower sub-structure. The common aggregates can be assembled on the lower sub-structure 1 through bolting, spot welding, arc welding, riveting, adhesive bonding, etc. The lower sub-structure 1 is taken as the reference segment of the vehicle to be made. The suspension tower inner 3.1 and 3.1a is assembled on both the left and right hand side of the lower sub-structure. The wheel arch inner 3.1 and 3.1a is assembled on both the left and right hand side of the lower sub-structure 1 from inside of the firewall. The rear floor assembly 4 is bolted on lower sub-structure 1 to complete the underbody. The rear engine 8 is mounted at the rear side of the lower sub-structure. The cradle 6 is provided for mounting the engine. The fuel tank 1a is mounted below lower sub-structure.

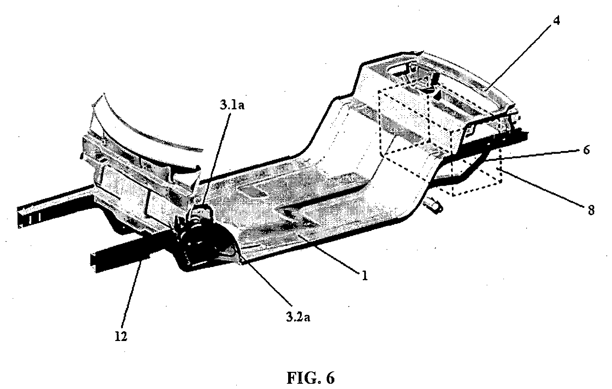

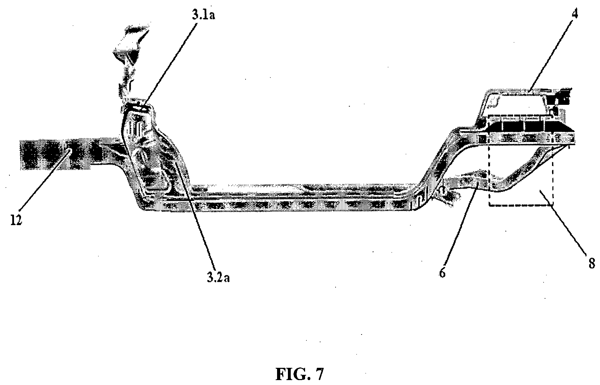

Fig. 6 shows an assembly of different sets of elements which form an underbody for Rear engine rear wheel drive vehicle. The configuration includes components 1, 3.1, 3.2, 3.1a, 3.2a, 4, 6 and 8. FIG. 7 is a side view of the underbody for rear-engine rear-wheel drive vehicle.

### ADVANTAGES

- The various embodiments of the present invention provide a common underbody for front engine front wheel drive as well as rear engine rear wheel drive vehicles.
- The modular underbody structure generates more vehicle variants with major common aggregates.
- The common underbody offers greater flexibility in transferring production from one plant to another due to standardization.
- More over it reduces the development and testing time.
- It offers greater space for electric, CNG, LPG, variants without hampering the customer usable space.
- Moving forward, the common under body can be used in compact car segments to reduce the cost of production and to offer large interior space.

## Claims

1. A common underbody for vehicles; comprising,
a lower sub-structure (1) having a front extended frame (12), firewall (13), front floor and a modular rear floor to accommodate common aggregates to define the underbody of the vehicle;
said common aggregates are selectively mounted on said lower sub-structure (1) to manufacture vehicle variants with desired location of engine at front end or rear end of the vehicles;
a cradle (6) provided at rear end of said lower sub-structure (1);
a frame extension elements (10 and 10a) and a mid floor (11) provided at rear end for manufacturing front engine variant;
a modular front suspension mounting point for manufacturing vehicle variants,
wherein said front extended frame is provided for mounting front engine in case of front engine front wheel drive vehicle,
wherein said common aggregates assembled on said sub-structure to manufacture front engine front wheel drive variant are wheel arch outer (2.1 and 2.1a), suspension tower outer (2.2 and 2.2a), wheel arch inner (2.3 and 2.3a), rear floor assembly (5), front engine, said cradle (6) for mounting CNG/LPG cylinder or battery (9) at rear end, a fuel tank (la) mounted below the lower sub-structure etc.,
wherein said common aggregates assembled on said lower sub-structure (1) to manufacture rear engine rear wheel drive variant are suspension tower inner (3.1 and 3.1a), wheel arch inner (3.1 and 3.1a), rear floor assembly (4), said cradle (6) for mounting engine (8) at rear end and a fuel tank (1 a) mounted below lower sub-structure,
wherein for front engine front wheel drive vehicle or sedan variant said front suspension mounting point is at the front where as for rear engine mounting the front wheel mounting point is shifted inside to reduce the distance between the front and the rear wheel base region,
wherein a change in a wheel base to obtain said vehicle variant is achieved by altering the location of front suspension mounting point while keeping the rear suspension mounting point same,
wherein said front suspension tower location can be mounted inside or outside of the passenger compartment without modifying or changing the firewall.

2. The common underbody according to claim 1, wherein in case of front engine mounting an CNG/LPG cylinder or battery can be mounted on said cradle below said modular rear floor.

3. The common underbody according to claim 1, wherein said frame extension (10 and 10a) and mid floor (11) is mounted on said substructure when the front engine such as sedan is to be constructed and said rear floor assembly (5) is fitted after mid floor (11) element to achieve the commonality.

4. The common underbody according to claim 1, wherein in case of rear engine mounting the floor portion 5 is removed and extended portion 4 is provided to mount the rear engine and the front engine mounting space can be utilized for mounting the spare wheel etc.

5. The common underbody according to claim 1, wherein said sub frame structure is provided for manufacturing vehicle variants such as hatch back, coupe, sedan, MPV etc.

6. The common underbody according to claim 1, wherein said cradle is provided for mounting rear engine or CNG/LPG cylinder or battery pack etc and further a modified frame can be attached at rear end for increase in the capacity of alternate fuels.

7. The common underbody according to claim 1, wherein said common aggregates includes a wheel arch outer, a suspension tower, a wheel arch inner, a rear floor assembly, front engine, rear engine, CNG cylinder, LPG cylinder, Battery Pack for electric vehicle, a cradle, a fuel tank, a frame extension element, and a mid floor.

8. The common underbody according to claim 1 , wherein said common aggregates are assembled on the lower sub-structure (1) through bolting, spot welding, arc welding, riveting, adhesive bonding etc.

## Patentansprüche

1. Allgemeine Unterbodenplattform für Fahrzeuge; umfassend
einen unteren Unterbau (1) mit einem vorderen erweiterten Rahmen (12), einer Spritzwand (13), einem vorderen Bodenblech und einem modularen hinteren Bodenblech zur Aufnahme allgemeiner Aggregate zur Definition des Fahrzeugunterbodens;
wobei die allgemeinen Aggregate auf dem unteren Unterbau (1) angebracht sind, um Fahrzeugvarianten mit der gewünschten Motoranordnung am vorderen oder hinteren Ende des Fahrzeugs herzustellen;
ein Gestell (6), das am hinteren Ende des unteren Unterbaus (1) vorgesehen ist;
Rahmenerweiterungselemente (10 und 10a) und ein mittleres Bodenblech (11), das am hinteren Ende zur Herstellung von Frontmotorvarianten vorgesehen ist;
einen modularen Vorderradaufhängungsmontagepunkt zur Herstellung von Fahrzeugvarianten,
wobei der vordere erweiterte Rahmen zum Frontmotoreinbau bei frontangetriebenem Fahrzeug vorgesehen ist,
wobei die allgemeinen Aggregate, die auf dem Unterbau zur Herstellung von frontangetriebenen Fahrzeugvarianten mit Frontmotor angebracht sind, der äußere Radkasten (2.1 und 2.1a), der äußere Aufhängungsturm (2.2 und 2.2a), der innere Radkasten (2.3 und 2.3a), die hintere Bodenblechgruppe (5), der Frontmotor, das Gestell (6) zum Einbau eines CNG/LPG-Zylinders oder einer Batterie (9) am hinteren Ende, ein unter dem unteren Unterbau eingebauter Kraftstofftank (1a) usw. sind,
wobei die allgemeinen Aggregate, die auf dem unteren Unterbau (1) zur Herstellung von heckangetriebenen Fahrzeugvarianten mit Heckmotor angebracht sind, der innere Aufhängungsturm (3.1 und 3.1a), der innere Radkasten (3.1 und 3.1a), die hintere Bodenblechgruppe (4), das Gestell (6) zum Einbau des Motors (8) am hinteren Ende und ein unter dem unteren Unterbau eingebauter Kraftstofftank (1 a) sind,
wobei für frontangetriebene Fahrzeugvarianten mit Frontmotor oder Limousinenvarianten der Vorderradaufhängungsmontagepunkt an der Front ist, während für den Heckmotoreinbau der Vorderradaufhängungsmontagepunkt nach innen verschoben ist, um den Abstand zwischen dem Vorderrad- und dem Hinterradbasisbereich zu verringern,
wobei eine Änderung in einer Radbasis zur Realisierung der Fahrzeugvariante durch Änderung des Vorderradaufhängungsmontagepunktes erzielt wird, während der Hinterradaufhängungsmontagepunkt unverändert bleibt,
wobei die Anordnung des Vorderradaufhängungsturms innerhalb oder außerhalb des Fahrgastraumes eingebaut werden kann, ohne die Spritzwand zu modifizieren oder zu ändern.

2. Allgemeine Unterbodenplattform nach Anspruch 1, wobei im Falle eines Frontmotoreinbaus ein CNG/LPG-Zylinder oder eine Batterie auf dem äußeren Gestell unter dem modularen hinteren Bodenblech angebracht werden kann.

3. Allgemeine Unterbodenplattform nach Anspruch 1, wobei die Rahmenerweiterung (10 und 10a) und das mittlere Bodenblech (11) auf dem Unterbau angebracht werden, wenn der Frontmotor, beispielsweise einer Limousine, gebaut werden soll und die hintere Bodenblechgruppe (5) nach dem mittleren Bodenblechelement (11) eingepasst wird, um die Einheitlichkeit zu erreichen.

4. Allgemeine Unterbodenplattform nach Anspruch 1, wobei beim Heckmotoreinbau der Bodenabschnitt 5 entfernt wird und der erweiterte Abschnitt 4 zum Heckmotoreinbau vorgesehen ist, während der Raum für den Frontmotoreinbau zum Einbau des Ersatzrades usw. genutzt werden kann.

5. Allgemeine Unterbodenplattform nach Anspruch 1, wobei der Unterrahmenbau zur Herstellung von Fahrzeugvarianten wie Kombilimousinen, Coupes, Sedan, Kompaktvans usw. vorgesehen ist.

6. Allgemeine Unterbodenplattform nach Anspruch 1, wobei das Gestell zum Einbau eines Heckmotors oder CNG/LPG-Zylinders oder Batterieteils usw. vorgesehen ist und ferner ein modifizierter Rahmen am hinteren Ende zur Erhöhung des Aufnahmevermögens für alternative Kraftstoffe angebracht werden kann.

7. Allgemeine Unterbodenplattform nach Anspruch 1, wobei die allgemeinen Aggregate einen äußeren Radkasten, einen Aufhängungsturm, einen inneren Radkasten, eine hintere Bodenblechgruppe, einen Frontmotor, einen Heckmotor, CNG-Zylinder, LPG -Zylinder, ein Batterieteil für Elektrofahrzeuge, ein Gestell, einen Kraftstofftank, ein erweitertes Rahmenelement und ein mittleres Bodenblech umfassen.

8. Allgemeine Unterbodenplattform nach Anspruch 1, wobei die allgemeinen Aggregate auf dem unteren Unterbau (1) mittels Verbolzen, Punktschweißen, Lichtbogenschweißen, Nieten, Verkleben usw. zusammengebaut werden.

## Revendications

1. Soubassement de carrosserie commun pour véhicules ; comprenant,
une sous-structure inférieure (1) ayant un châssis étendu avant (12), une cloison pare-feu (13), un plancher avant et un plancher arrière modulaire pour accueillir des agrégats communs pour définir le soubassement de carrosserie du véhicule ;
lesdits agrégats communs sont sélectivement montés sur ladite sous-structure inférieure (1) pour fabriquer des variantes de véhicule ayant un emplacement souhaité de moteur à l'extrémité avant ou à l'extrémité arrière des véhicules ;
un berceau (6) prévu à l'extrémité arrière de ladite sous-structure inférieure (1) ;
des éléments d'extension de châssis (10 et 10a) et un plancher intermédiaire (11) prévus à l'extrémité arrière pour la fabrication d'une variante à moteur avant ;
un point de montage de suspension avant modulaire pour la fabrication de variantes de véhicule,
dans lequel ledit châssis étendu avant est prévu pour le montage d'un moteur avant dans le cas d'un véhicule à traction avant à moteur avant,
dans lequel lesdits agrégats communs assemblés sur ladite sous-structure pour fabriquer une variante à traction avant à moteur avant sont un extérieur de passage de roue (2.1 et 2.1a), un extérieur de tour de suspension (2.2 et 2.2a), un intérieur de passage de roue (2.3 et 2.3a), un ensemble plancher arrière (5), un moteur avant, ledit berceau (6) pour le montage d'une bouteille de GNC/GPL ou d'une batterie (9) à l'extrémité arrière, un réservoir de carburant (la) monté au-dessous de la sous-structure inférieure, etc.,
dans lequel lesdits agrégats communs assemblés sur ladite sous-structure inférieure (1) pour fabriquer une variante à traction arrière à moteur arrière sont un intérieur de tour de suspension (3.1 et 3.1a), un intérieur de passage de roue (3.1 et 3.1a), un ensemble plancher arrière (4), ledit berceau (6) pour le montage d'un moteur (8) à l'extrémité arrière et un réservoir de carburant (la) monté au-dessous de la sous-structure inférieure,
dans lequel, pour un véhicule à traction avant à moteur avant ou une variante berline, ledit point de montage de suspension avant est à l'avant, tandis que pour le montage d'un moteur arrière le point de montage de roue avant est décalé à l'intérieur pour réduire la distance entre la région d'empattement avant et arrière,
dans lequel un changement d'un empattement pour obtenir ladite variante de véhicule est obtenu par l'altération de l'emplacement du point de montage de suspension avant tout en conservant le même point de montage de suspension arrière,
dans lequel ledit emplacement de tour de suspension avant peut être monté à l'intérieur ou à l'extérieur de l'habitacle sans modifier ou changer la cloison pare-feu.

2. Soubassement de carrosserie commun selon la revendication 1, dans lequel, dans le cas d'un montage d'un moteur avant, une bouteille de GNC/GPL ou une batterie peut être montée sur ledit berceau au-dessous dudit plancher arrière modulaire.

3. Soubassement de carrosserie commun selon la revendication 1, dans lequel ladite extension de châssis (10 et 10a) et ledit plancher intermédiaire (11) sont montés sur ladite sous-structure lorsque le moteur avant tel qu'une berline doit être construit et ledit ensemble de plancher arrière (5) est ajusté après l'élément de plancher intermédiaire (11) pour obtenir les caractéristiques communes.

4. Soubassement de carrosserie commun selon la revendication 1, dans lequel, dans le cas d'un montage d'un moteur arrière, la partie de plancher 5 est retirée et la partie étendue 4 est prévue pour monter le moteur arrière et l'espace de montage de moteur avant peut être utilisé pour le montage de la roue de secours, etc.

5. Soubassement de carrosserie commun selon la revendication 1, dans lequel la structure de sous-châssis est prévue pour la fabrication de variantes de véhicules telles que berline à hayon, coupé, berline, monospace, etc.

6. Soubassement de carrosserie commun selon la revendication 1, dans lequel ledit berceau est prévu pour le montage d'un moteur arrière ou d'une bouteille de GNC/GPL ou d'une batterie, etc., et en outre un châssis modifié peut être fixé à l'extrémité arrière pour augmenter la capacité en carburants alternatifs.

7. Soubassement de carrosserie commun selon la revendication 1, dans lequel lesdits agrégats communs incluent un extérieur de passage de roue, une tour de suspension, un intérieur de passage de roue, un ensemble plancher arrière, un moteur avant, un moteur arrière, une bouteille de GNC, une bouteille de GPL, un bloc-batterie pour véhicule électrique, un berceau, un réservoir de carburant, un élément d'extension de châssis et un plancher intermédiaire.

8. Soubassement de carrosserie commun selon la revendication 1, dans lequel lesdits agrégats communs sont assemblés sur la sous-structure inférieure (1) par boulonnage, soudage par points, soudage à l'arc, rivetage, collage par adhésif, etc.
